# FASCICULE DE BREVET EUROPEEN

(11) **EP 0 732 664 B1**
(45) Date de publication et mention de la délivrance du brevet: **16.01.2002**
(21) Numéro de dépôt: 96400505.2
(22) Date de dépôt: 12.03.1996
(51) Int. Cl.: G06K 7/10, G06K 7/00, G06K 7/08

(54) **Dispositif d'échange d'informations à distance entre un lecteur sans contact et une carte électronique à mémoire**
Einrichtung zum Fernaustausch von Informationen zwischen einem Leser ohne Kontakte und einer elektronischen Speicherkarte
Device for the remote exchange of information between a reader without contact and an electronic memory card

(30) Priorité: 14.03.1995 FR 9502912
(43) Date de publication de la demande: 18.09.1996
(73) Titulaire: FRANCE TELECOM, 75015 Paris (FR); LA POSTE, 92777 Boulogne Billancourt Cédex (FR)
(72) Inventeur: Michel, Philippe, 14000 Caen (FR)
(74) Mandataire: Dubois-Chabert, Guy

(56) Documents cités:
- EP-A- 0 404 148
- EP-A- 0 494 114
- EP-A- 0 513 456
- PATENT ABSTRACTS OF JAPAN vol. 13, no. 476 (E-837), 16 Octobre 1989 & JP-A-01 188024 (TOSHIBA CORP.), 27 Juillet 1989,

## Description

### Domaine technique

L'invention concerne un dispositif pour l'échange d'informations entre un lecteur sans contact et une carte électronique à mémoire, telle qu'une carte à mémoire sans contact (qui contient une puce) ou une étiquette électronique.

L'invention trouve des applications dans tous les domaines utilisant des cartes à puces et, notamment, dans le domaine bancaire avec les cartes bancaires, dans le domaine des télécommunications avec les cartes téléphoniques ou encore dans le domaine de l'entreprise avec les cartes multiservice.

### Etat de la technique

Dans le brevet français FR-A-2 666 187, il est décrit un dispositif de dialogue à distance entre une station et un ou plusieurs objets portatifs. En particulier, ce dispositif concerne l'échange d'informations entre un terminal informatique ou un lecteur sans contact et une carte à puce sans qu'il y ait de contact physique entre ledit terminal et ladite carte à puce.

Dans ce dispositif, la carte à puce est interrogée par le terminal informatique au moyen d'un champ d'interrogation radioélectrique qui est émis par ledit terminal vers la carte à puce pour lui demander de renvoyer des informations mémorisées dans la puce.

La carte à puce comporte deux modes de fonctionnement :
- un mode passif, c'est-à-dire un mode de basse consommation qui s'établit lorsqu'il n'y a pas de transaction entre la carte et le lecteur ; et
- un mode actif dans lequel la carte consomme de l'énergie ; ce mode est établi lorsqu'il y a échange de données entre la carte et le lecteur.

Et tant que la carte détecte la présence du champ radioélectrique, elle reste en mode actif dans l'attente d'un éventuel message. Aussi, pendant cette attente, la carte consomme de l'énergie.

Or, dans certaines applications, la carte à puce peut être posée sur le terminal (ou lecteur) pendant une durée de temps relativement longue, c'est-à-dire une durée de plusieurs heures. Toutefois, tant que la carte est posée sur le lecteur, ce dernier émet un champ radioélectrique ; la carte reste donc en mode actif et consomme de l'énergie. Et comme cette carte est active, c'est-à-dire qu'elle possède sa propre source d'énergie (par exemple, une pile), cette attente est néfaste pour la carte qui se vide inutilement de son énergie.

En outre, le terminal informatique, ou lecteur, est associé à un système informatique (par exemple, un micro-ordinateur) qui peut difficilement gérer l'émission du champ radioélectrique en continu. En effet, lorsque le système informatique doit gérer une autre application que l'émission du champ radioélectrique ou en cas d'erreur système ou d'arrêt du système, ledit système informatique ne peut plus assurer momentanément la gestion de l'émission du champ radioélectrique ; le lecteur émet donc en continu un champ radioélectrique alors que l'opérateur croit l'émission arrêtée.

Il existe, toutefois, un dispositif dans lequel la transmission entre le transpondeur est interrompue lorsque le système interrogateur à reçu une information correcte de ce transpondeur. Ce dispositif est décrit dans la demande de brevet EP-A-0 494 114. Cependant, avec ce dispositif, la transmission reste active vers d'autres transpondeurs qui n'ont pas encore fourni leur message.

Il existe, par ailleurs, un document EP-A-0 404 148 qui reflète le préambule de la revendication 1, et qui décrit un dispositif et un procédé pour transmettre des messages à durée prédéterminée émis par des dispositifs répondeurs, en réponse à un message d'interrogation envoyé par un dispositif interrogateur. Ce procédé permet au dispositif interrogateur de détecter plusieurs messages émis par plusieurs dispositifs répondeurs quelles que soient la qualité et la rapidité d'émission des messages. Pour cela, le procédé consiste à vérifier si un signal est en train d'être reçu par le dispositif interrogateur et, en fonction du résultat de cette vérification, à émettre immédiatement ou après un temps prédéfini un nouveau message d'interrogation destiné à interroger les dispositifs répondeurs qui seraient susceptibles de répondre au dispositif interrogateur.

Ce dispositif permet donc de détecter plusieurs messages ; mais il ne tient nullement compte de la consommation inutile d'énergie des cartes, lorsqu'il n'y a pas de transaction entre les cartes et le lecteur.

### Exposé de l'invention

L'invention a justement pour but de remédier aux inconvénients du dispositif de l'art antérieur. A cette fin, elle propose un dispositif de dialogue entre un lecteur sans contact et une carte à puce qui comporte des moyens de contrôle permettant d'interrompre l'émission du champ radioélectrique lorsqu'aucune transaction ne s'effectue entre le lecteur et la carte à puce.

De façon plus précise, l'invention concerne un dispositif pour l'échange d'informations à distance entre des moyens portatifs de stockage d'informations et des moyens de lecture de ces informations, ces moyens de lecture émettant, vers lesdits moyens portatifs, un champ d'interrogation radioélectrique pour demander auxdits moyens portatifs de renvoyer certaines au moins des informations stockées, ledit dispositif comportant :
- des moyens de gestion et de traitement des informations échangées, aptes à envoyer des instructions auxdits moyens de lecture ; et
- des moyens de contrôle connectés entre lesdits moyens de gestion et de traitement et les moyens de lecture,
caractérisé en ce que les moyens de contrôle comportent un port d'entrée et un port de sortie, tous deux connectés à une porte logique ET, dont la sortie fournit un signal logique autorisant ou interdisant au moyen de lecture d'émettre le champ d'interrogation radioélectrique, de sorte que l'émission du champ d'interrogation radioélectrique est asservie à la durée de l'échange d'informations entre les moyens portatifs et les moyens de lecture.

Avantageusement, les moyens de contrôle comportent un microcontrôleur consistant en un microprocesseur sur lequel sont connectés des unités de mémoire, ainsi que des ports d'entrée/sortie.

Ils comportent, en outre, une porte logique ET ayant une première entrée connectée sur une entrée du microcontrôleur, une seconde entrée connectée sur une sortie dudit microcontrôleur et une sortie connectée sur une entrée des moyens de lecture ; ce circuit logique ET est apte à autoriser ou interdire l'émission du champ d'interrogation radioélectrique.

Les moyens de contrôle peuvent aussi comporter une horloge assurant une temporisation de l'émission du champ d'interrogation radioélectrique.

Selon l'invention, les moyens de gestion et de traitement comportent un système informatique connecté à un système d'interface des niveaux électriques ; ce système d'interface est apte à adapter le niveau électrique des signaux provenant du système informatique au niveau électrique des signaux traités par les moyens de contrôle.

### Brève description des figures

- La figure 1 représente schématiquement le dispositif de l'invention ; et
- la figure 2 représente un diagramme fonctionnel des opérations effectuées par le microcontrôleur.

### Description de modes de réalisation de l'invention

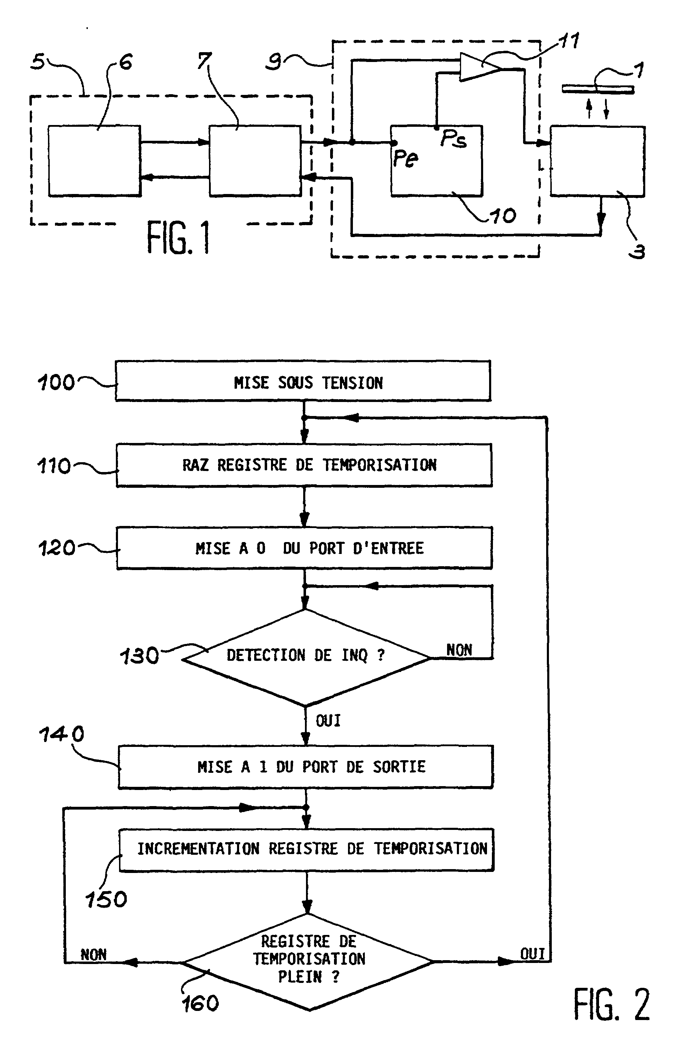

Sur la figure 1, on a représenté schématiquement le dispositif de l'invention avec les différents éléments qui le constituent. Ce dispositif comporte tout d'abord des moyens portatifs de stockage d'informations, c'est-à-dire des moyens portatifs dans lesquels des informations peuvent être mémorisées. Ces moyens portatifs sont référencés 1. Ils peuvent être, par exemple, une carte électronique à mémoire et, plus particulièrement, une carte sans contact. Aussi, pour une meilleure compréhension de l'invention, on parlera de préférence, dans la description, de cartes à puces, plutôt que de moyens portatifs de stockage d'informations.

Le dispositif de l'invention comporte de plus des moyens de lecture destinés à lire les informations contenues dans la carte à puce 1. Ces moyens de lecture sont référencés 3 et sont appelés, par mesure de simplification, "lecteur sans contact" ou tout simplement "lecteur". Ce lecteur est connecté à des moyens de gestion et de traitement des informations, référencés 5, par l'intermédiaire de moyens de contrôle 9.

Selon le mode de réalisation préféré de l'invention, les moyens 5 de gestion et de traitement des informations échangées comportent un système informatique 6, du type micro-ordinateur, et une interface de niveaux électriques 7. De façon plus précise, le micro-ordinateur 6 traite les informations que le lecteur a reçues de la mémoire de la carte à puce 1 et transmises audit micro-ordinateur ; de plus, il gère les instructions à envoyer au lecteur 3. L'interface de niveaux électriques 7 peut être, par exemple un MAX 232® fabriqué et commercialisé par la Société MAXIM ; il a pour rôle d'interfacer les différents niveaux électriques provenant des différents éléments du dispositif de l'invention. De façon plus précise, le micro-ordinateur 6 émet et reçoit des informations numériques, c'est-à-dire des informations de niveaux logiques O et 1 qui correspondent, respectivement, à des tensions de plus 12 volts et de moins 12 volts. Les moyens de contrôle 9, qui seront expliqués plus précisément dans la suite de la description, traitent des informations de niveaux logiques O et 1 qui correspondent à des tensions respectives de 0 volt et de plus 5 volts. L'interface de niveaux électriques 7 permet donc d'adapter les signaux utilisés dans les moyens de contrôle 9 avec les signaux utilisés par les micro-ordinateurs et dont les niveaux sont imposés par les câbles de raccordement entre les différents matériels informatiques.

L'ensemble constitué du micro-ordinateur 6 et de l'interface 7 peut être considéré comme un contrôleur ou un ordinateur maître.

Comme cité précédemment, le lecteur sans contact 3 est connecté au micro-ordinateur 6 par l'intermédiaire de l'interface 7 et aussi par l'intermédiaire des moyens de contrôle 9. Ces moyens de contrôle 9 comportent un microcontrôleur 10 qui exécute des programmes d'une façon autonome et une porte logique 11. Plus précisément, le microcontrôleur 10 est constitué d'un microprocesseur, tel que le microprocesseur 6805 commercialisé par la Société MOTOROLA®, sur lequel sont connectées des unités de mémoire, ainsi que des ports d'entrées/sorties. Le microprocesseur et les unités de mémoire de ce microcontrôleur 10 n'ont pas été illustrés sur la figure 1 par mesure de simplification de la figure. Par contre, le port d'entrée du microcontrôleur 10 est référencé Pe et le port de sortie du microcontrôleur 10 est reférencé Ps. Le microcontrôleur 10 est connecté par son port Pe à l'interface 7 et à une entrée de la porte logique ET, 11, et par son port Ps à une seconde entrée de la porte logique ET, 11. La sortie de la porte logique ET est connectée sur une entrée du lecteur 3. Le signal logique en sortie de la porte ET assure ou interdit l'émission du champ radioélectrique par le lecteur 3. Lorsque l'état logique est 1, il y a émission. Au contraire, lorsque l'état logique est 0, il n'y a pas d'émission possible. On précise toutefois, que l'état normal de la ligne de transmission est à l'état logique 1. Aussi, lorsque le microcontrôleur 10 choisit d'interdire l'émission du champ radioélectrique, il doit transformer l'état logique normal 1 en un état logique 0. Cette transformation est effectuée grâce à la porte logique ET, 11.

Dans le dispositif de l'invention, le microcontrôleur 10 se comporte comme un dispositif intelligent, capable d'analyser le contenu d'un message reçu du micro-ordinateur 6 et capable d'émettre, en fonction du message reçu, un certain nombre d'ordres destinés au lecteur 3. En particulier, le microcontrôleur 10 est apte à analyser les messages envoyés par le micro-ordinateur 6 et à décider de l'émission ou de l'interdiction d'émission du champ radioélectrique.

Plus précisément, le micro-ordinateur initialise une transaction par une première interrogation INQ permettant de savoir si une carte est prête à être lue. Si la réponse est "oui", un premier signal logique à "1" est envoyé par l'ordinateur vers le microcontrôleur 10 qui le transmet à la porte logique ET. Dans le cas contraire, un signal "0" est transmis et le microcontrôleur n'autorise pas l'émission du champ radioélectrique. Le micro-ordinateur répète une seconde fois l'interrogation INQ pour démarrer la transaction avec la carte à puce. Ainsi, la porte logique ET, 11, reçoit sur une première entrée la valeur 1, validée par le microcontrôleur sur le port Ps et indiquant qu'une carte est présente sur sa seconde entrée ; elle reçoit sur sa seconde entrée, le résultat de la seconde interrogation INQ réalisée par le micro-ordinateur. Lorsque le résultat de cette seconde interrogation est 1, alors l'ordre d'interroger la carte à puce est transmis au lecteur 3. Ainsi, le message, appelé "INQ", est interprété par la carte comme une invitation au dialogue. La porte logique ET laisse alors passer les données vers le lecteur sans contact 3 et le microcontrôleur 10 ne scrute plus le port d'entrée Pe.

Au contraire, si le résultat de cette seconde interrogation est 0, alors le lecteur 3 reçoit l'ordre de ne pas émettre de champ d'interrogation ou d'interrompre l'émission en cours.

Le microcontrôleur 10 est, de plus, apte à contrôler la durée de l'émission du champ radioélectrique. En effet, chaque interrogation envoyée par le lecteur 3 à l'intention de la carte à puce 1 a une durée prédéfinie. Selon un mode de réalisation de l'invention, cette durée est fixée à 2 secondes. Le microcontrôleur 10 vérifie donc que l'émission du champ radioélectrique n'est effective que pendant la phase de dialogue, c'est-à-dire pendant cette durée de 2 secondes. En conséquence, si le microcontrôleur 10 détecte qu'il n'y a plus de dialogue entre le lecteur et la carte à puce après une durée de 2 secondes, il assure l'interruption du champ radioélectrique par le lecteur, après cette temporisation de 2 secondes. Aussi, pour mettre en oeuvre son rôle de contrôleur de durée, le microcontrôleur 10 comporte une horloge qui assure cette temporisation de 2 secondes. On précise toutefois que la durée choisie peut être, selon les applications, plus longue ou plus courte que celle de l'exemple (2 secondes) considéré dans la présente demande.

Sur la figure 2, on a représenté le diagramme fonctionnel des différentes opérations mises en oeuvre par le dispositif de l'invention. Tout d'abord, le micro-ordinateur 6 et l'ensemble du dispositif sont mis sous tension. Cette opération est représentée par le bloc 100. L'opération 110 consiste ensuite en une remise à 0 du registre de temporisation, c'est-à-dire une remise à 0 de l'horloge. Lorsque cette remise à 0 est effectuée, l'opération 120 qui consiste en une mise à 0 du port d'entrée Pe du microcontrôleur 10 est effectuée.

Comme on l'aura compris, le micro-ordinateur 6 est maître par rapport à la carte à puce 1. C'est donc lui qui initialise chaque transaction au moyen d'une interrogation permettant de détecter si une carte à puce est présente devant le lecteur. Cette interrogation, appelée "INQ", consiste en un octet particulier ou en une suite d'octets, ou encore en un morceau de trame. L'opération 130 consiste donc en la détection, par le microcontrôleur 10, de la présence de cette interrogation INQ sur le port d'entrée Pe. Si le microcontrôleur a détecté la présence de la carte à puce, alors le procédé se poursuit par le bloc 140 qui consiste en une validation à 1 du signal logique, ce qui correspond en fait à la mise à 1 du port de sortie Ps du microcontrôleur. Ce signal logique à 1 est envoyé en direction du dispositif d'émission du champ radioélectrique, c'est-à-dire du lecteur 3 qui lui, initialement, était à l'état 0. Si aucune présence de carte n'est détectée par le microcontrôleur, alors l'opération de détection 130 est réitérée à chaque temporisation, c'est-à-dire toutes les deux secondes pour le mode de réalisation de l'invention décrit.

Le micro-ordinateur répète une seconde fois cette interrogation INQ afin de démarrer la transaction avec la carte à puce, puisque la première interrogation n'a pour rôle que d'autoriser une émission de champ radioélectrique. La deuxième interrogation, quant à elle, permet d'interroger effectivement la carte à puce. Les échanges de données, entre le lecteur 3 et la carte à puce 1 se poursuivent durant toute une temporisation. Le registre de temporisation est donc incrémenté, à chacun des échanges, dans le bloc 150. Lorsqu'une temporisation (de 2 secondes pour ce mode de réalisation) est terminée, le microcontrôleur 10 dévalide le signal logique, c'est-à-dire qu'il met à 0 le port d'entrée Pe, ce qui a pour effet d'interrompre l'émission du champ radioélectrique. Cette opération est symbolisée sur la figure 2 par le bloc 160 qui permet de vérifier si le registre de temporisation est plein. Si le registre de temporisation n'est pas plein, le procédé retourne au début de l'étape 150 d'incrémentation du registre de temporisation. Au contraire, lorsque le registre de temporisation est détecté comme étant plein, alors le procédé retourne à l'étape 110 de remise à 0 du registre de temporisation, et une autre opération de dialogue entre la carte à puce et le lecteur peut être effectuée de la manière expliquée par cette figure 2.

Lorsque le champ radioélectrique a été interrompu par le microcontrôleur, la carte à puce peut rester posée sur le lecteur sans que la pile de la carte ne se décharge. Si d'autres informations doivent être échangées entre la carte et le lecteur, alors le micro-ordinateur recommence son procédé d'interrogation et de mise en route du processus jusqu'à ce qu'il n'y ait plus d'échange à effectuer entre la carte et le lecteur.

## Revendications

1. Dispositif pour l'échange d'informations à distance entre des moyens portatifs de stockage d'informations (1) et des moyens (3) de lecture de ces informations, ces moyens de lecture émettant, vers lesdits moyens portatifs, un champ d'interrogation radioélectrique pour demander auxdits moyens portatifs de renvoyer certaines au moins des informations stockées,
ledit dispositif comportant :
- des moyens (5) de gestion et de traitement des informations échangées, aptes à envoyer des instructions auxdits moyens de lecture ; et
- des moyens de contrôle (9) connectés entre lesdits moyens de gestion et de traitement et les moyens de lecture,
**caractérisé en ce que** les moyens de contrôle (9) comportent un port d'entrée (Pe) et un port de sortie (Ps), tous deux connectés à une porte logique ET (11), dont la sortie fournit un signal logique autorisant ou interdisant au moyen de lecture (3) d'émettre le champ d'interrogation radioélectrique, de sorte que l'émission du champ d'interrogation radioélectrique est asservie à la durée de l'échange d'informations entre les moyens portatifs et les moyens de lecture.

## Patentansprüche

1. Vorrichtung zum Fernaustausch von Informationen zwischen tragbaren Informationsspeichermitteln (1) und Lesemitteln (3) für diese Informationen, wobei diese Lesemittel an die tragbaren Mittel ein Abfragefunkfeld zur Aufforderung der tragbaren Mittel zur Übersendung von mindestens einigen gespeicherten Informationen ausstrahlen, wobei die Vorrichtung umfasst:
- Mittel (5) zum Betrieb und zur Verarbeitung der ausgetauschten Informationen mit der Fähigkeit, Anweisungen an die Lesemittel zu senden; und
- Steuermittel (9), die zwischen die Betriebs- und Verarbeitungsmittel und die Lesemittel geschaltet sind,
**dadurch gekennzeichnet, dass** die Steuermittel (9) einen Eingangsanschluss (Pe) und einen Ausgangsanschluss (Ps) umfassen, die alle beide mit einer Logikschaltung ET (11) verbunden sind, deren Ausgang ein Logiksignal liefert, das dem Lesemittel (3) das Ausstrahlen des Abfragefunkfeldes in der Weise gestattet oder untersagt, dass die Ausstrahlung des Abfragefunkfeldes auf die Dauer des Informationsaustauschs zwischen den tragbaren Mitteln und den Lesemitteln beschränkt ist.

## Claims

1. Arrangement for the remote exchange of information between portable means (1) for storing information and means (3) for reading this information, these reading means emitting, towards the said portable means, an interrogation radio field for demanding that the said portable means should send back at least some of the stored information, this arrangement comprising:
- means (5) for handling and processing the information exchanged, designed to send instructions to the said reading means; and
- control means (9) connected between the said handling and processing means and the reading means,
**characterised in that** the control means (9) have an input port (Pe) and an output port (Ps), both connected to an AND logic gate (11), of which the output provides a logic signal authorising or preventing the reading means (3) emitting the interrogation radio field, in such a way that the emission of the interrogation radio field is confined to the duration of the exchange of information between the portable means and the reading means.
